# EUROPEAN PATENT SPECIFICATION

(11) **EP 0 341 421 B1**
(45) Date of publication and mention of the grant of the patent: **25.10.1995**
(21) Application number: 89106098.0
(22) Date of filing: 07.04.1989
(51) Int. Cl.: C08L 71/12, C08L 81/02, C08L 63/00, C08L 57/00

(54) **Polymer mixture which comprises a polyphenylene ether, a polyarylene sulphide and an epoxy compound**
Polymermischung, die ein Polyphenylenäther, ein Polyphenylsulfid und eine Epoxydverbindung enthält
Mélange de polymères, comprenant un poly(éther de phénylène), un poly(sulfure d'arylène) et un composé époxyde

(30) Priority: 03.10.1988 NL 8802416; 09.05.1988 NL 8801199
(43) Date of publication of application: 15.11.1989
(73) Proprietor: GENERAL ELECTRIC COMPANY, Schenectady, N.Y. 12151 (US)
(72) Inventor: Dekkers, Marinus Emanuel Johannes, NL-4600 AC Bergen op Zoom (NL)
(74) Representative: Grever, Frederik

(56) References cited:
- EP-A- 0 262 901

## Description

The invention relates to a polymer mixture which comprises a polyphenylene ether (A), a polyarylene sulphide (B), and an epoxy compound (C), and to articles formed therefrom.

The above-described polymer mixtures are described in EP-A-0 104 543. Polymer mixtures which comprise a polyphenylene ether and a polyarylene sulphide have a combination of properties which each of the individual components does not have, for example, a combination of certain mechanical properties, a good resistance to organic solvents, a better processability and flame-retarding properties. In accordance with the desired combination of properties, the two polymers are used in a variety of mixing ratios.

The known polymer mixtures suffer from the disadvantage that the two polymers do not constitute a homogeneous mixture. Products manufactured from these polymer mixtures, for example, by injection-moulding show the tendency to delamination. This often leads to a surface having a pearl gloss. It also often appears that the addition of further auxiliary substances, for example, agents to improve the impact strength, to non-homogeneous polymer mixtures only results in a small improvement of the properties.

The invention is based on the discovery that it is possible by the use of a functionalised polyphenylene ether in combination with an epoxy compound, to obtain polymer mixtures having improved properties, in particular improved mechanical properties.

The polymer mixture according to the invention is characterised in that the polymer mixture comprises as a polyphenylene ether (A) a functionalised polyphenylene ether or a mixture of functionalised and a non-functionalised polyphenylene ether.

Calculated with repect to the sum of the quantities by weight of A + B + C, the polymer mixture according to the invention preferably comprises at least 5% by weight of the functionalised polyphenylene ether. With lower concentrations the desired improvement of the mechanical properties hardly occurs.

As a functionalised polyphenylene ether the polymer mixture comprises the reaction product of (a) a polyphenylene ether and (b) a compound of the general formula (i)-Z-(ii), wherein (i) is a group of the formula [X-C(0)] with X = F, Cl, Br, I, OH, -OR, or -0-C(0)-R with R = H, alkyl or aryl, wherein (ii) is a carboxylic acid, acid anhydride, acid amide, imido, carboxylic acid ester, amino, epoxy or hydroxyl group, and wherein the groups (i) and (ii) are bonded together covalently via a bridge Z, Z being a bivalent hydrocarbon radical or the reaction product of a non-functionalised polyphenylene ether and a compound having in the molecular structure a two-fold or three-fold carbon-to-carbon bond and a carboxylic acid, acid anhydride, acid amide, imido, carboxylic acid ester, amino, epoxy or hydroxyl group a polyphenylene ether with 0.01-35 mol.% of polyphenylene ether components which comprise a COOH group at the aromatic nucleus or at one of the methylgroups substituted at the nucleus or the reaction product of a polyphenylene ether with a polycarboxylic acid.

Moreover, the polymer mixture according to the invention preferably comprises an agent to improve the impact strength.

The polymer mixture according to the invention comprises at any rate the following constituents.
A. a functionalised polyphenylene ether or a mixture of a non-functionalised and a functionalised polyphenylene ether.
B. a polyarylene sulphide.
C. an epoxy compound.

The polymer mixture of the invention comprises at least 5% by weight of the funtionalised polyphenylene ether calculated with respect to the sum of the quantities by weight of A + B + C.

### A. Functionalised polyphenylene ether or a mixture of a non-functionalised polyphenylene ether and a functionalised polyphenylene ether

Polyphenylene ethers are compounds known per se.

For this purpose reference may be made to the United States Patent Specifications 3,306,874; 3,306,875; 3,257,357 and 3,257,358. Polyphenylene ethers are usually prepared by an oxidative coupling reaction - in the presence of a copper amine complex - of one or more two-fold or three-fold substituted phenols, homopolymers, and copolymers, respectively, being obtained. Copper amine complexes derived from primary, secondary and/or teriary amines may be used. Examples of suitable polyphenylene ethers are:
poly(2,3-dimethyl-6-ethylphenylene-1,4-ether)
poly(2,3,6-trimethylphenylene-1,4-ether)
poly [2-(4'-methylphenyl)phenylene-1,4-ether]
poly(2-bromo-6-phenylphenylene-1,4-ether)
poly(2-methyl-6-phenylphenylene-1,4-ether)
poly(2-phenylphenylene-1,4-ether)
poly(2-chlorophenylene-1,4-ether)
poly(2-methylphenylene-1,4-ether)
poly(2-chloro-6-ethylphenylene-1,4-ether)
poly(2-chloro-6-bromophenylene-1,4-ether)
poly(2,6-di-n-propylphenylene-1,4-ether)
poly(2-methyl-6-isopropylphenylene-1,4-ether)
poly(2-chloro-6-methylphenylene-1,4-ether)
poly(2-methyl-6-ethylphenylene-1,4-ether)
poly(2,6-dibromophenylene-1,4-ether)
poly(2,6-dichlorophenylene-1,4-ether)
poly(2,6-diethylphenylene-1,4-ether)
poly(2,6-dimethylphenylene-1,4-ether)
Copolymers, for example, copolymers derived from two or more phenols as used in the preparation of the homopolymers mentioned hereinbefore, are also suitable. Furthermore, graft copolymers and block copolymers of vinylaromatic compounds, for example, polystyrene, and of polyphenylene ether as described above, are also suitable.

Functionalised polyphenylene ethers are to be understood to mean herein polyphenylene ethers which in their molecule have one or more reactive groups capable of reacting with a compound having a basic group. Examples of such groups are carboxylic acid groups or groups derived therefrom. They must be chosen from the types of products described below.

Functionalised polyphenylene ethers can be obtained in various manners. Two preferably used functionalised polyphenylene ethers are those which are described in WO-A-86/02086 and EP-A-0226055, respectively.

The functionalised polyphenylene ethers described in WO-A-86/02086 may be described as the reaction product of (a) a polyphenylene ether and (b) a compound of the general formula (i)-Z-(ii), wherein (i) is at least a group of the formula [X-C(0)] with X = F, Cl, Br, I, OH, -OR, or -0-C(0)-R, with R = H, alkyl or aryl, wherein (ii) is at least a carboxylic acid, acid anhydride, acid amide, imido, carboxylic acid ester, amino, epoxy or hydroxyl group, and wherein the groups (i) and (ii) are bonded together covalently via a bridge Z, Z being a bivalent hydrocarbon radical.

The functionalised polyphenylene ethers described in EP-A-0226055 may be described as the reaction product of a polyphenylene ether and an ethenic unsaturated carboxylic acid.

Suitable functionalised polyphenylene ethers are further the reaction products of a polyphenylene ether and a compound having in its molecular structure a two-fold or three-fold carbon-to-carbon bond and a carboxylic acid, acid anhydride, acid amide, imido, carboxylic acid ester, amino, epoxy or hydroxyl group.

A third type of functionalised polyphenylene ethers is described in EP-A-0222250. This type of polyphenylene ether may also be used in the polymer mixture according to the invention. These polyphenylene ethers comprise 0.01-35 mol.% of polyphenylene ether components which comprise a COOH group at the aromatic nucleus or at one of the methyl groups substituted at the nucleus.

It is further possible to use as a functionalised polyphenylene ether the reaction product of a non-functionalised polyphenylene ether with a polycarboxylic acid as described in WO-85/05372. Citric acid may be mentioned in particular as a suitable polycarboxylic acid. The reaction may be carried out by compounding the non-functionalised polyphenylene ethers with the polycarboxylic acid in an extruder.

The reaction product of a polyphenylene ether and the chloride of trimellitic acid anhydride or the reaction product of the polyphenylene ether with an unsaturated carboxylic acid, for example, maleic acid anhydride, is preferably used as a functionalised polyphenylene ether in the polymer mixture according to the invention.

### B. Polyarylene sulphide

Polyarylene sulphides are polymers known per se. Polyarylene sulphides prepared according to any of the known methods of preparing polyarylene sulphides, for example, as described in US-A-3,354,129 may be used in the polymer mixtures according to the invention. In this method polyhalo-aromatic compounds, alkali metal sulphides and organic amides are contacted with each other under polymerisation conditions. A second suitable method is described, for example, in US-A-3,919,177 in which a p-dihalobenzene, an alkali metal sulphide, an organic amide and an alkali metal carboxylate are contacted with each other under polymerisation conditions.

Polyarylene sulphides which have been subjected to an after-treatment to increase the molecular weight, sometimes termed curing, are preferably used in the polymer mixture according to the invention. Said after-treatment is described, for example, in US-A-3,699,087; US-A-3,717,620; US-A-3,725,362 and US-A-3,793,256.

### C. Epoxy compound

The epoxy compounds used may be liquid or solid. Epoxy compounds are to be understood to mean herein compounds which comprise at least one epoxy group. Compounds having more than one epoxy group are preferably used. Examples of suitable epoxy compounds are: glycidyl ethers of bisphenols, for example, bisphenol A, diphenyl dimethyl methane, 4,4′-dihydroxybiphenyl, 1,5-dihydroxynaphthalene, cashew phenol, dihydroxy-diphenyl sulphone and 2,2,5,5,-tetrakis (4-hydroxyphenyl)hexane; glycidyl ethers of halogenated bisphenols, glycidyl ethers, for example, a diglycidyl ether of butanediol; glycidyl ethers, for example, glycidylphthalate; glycidyl amines, for example, N-glycidyl aniline; linear non-glycidyl epoxy resins, for example, epoxidised polyolefins and epoxydised soya bean oils; cyclic non-glycidyl epoxy resins, for example, vinyl cyclohexene dioxide and dicyclopentadiene dioxide; and novolak phenol-type resins. These compounds may be used each individually or in the form of a mixture of two or more different compounds.

The constituents A, B and C mentioned hereinbefore are preferably used in the following quantities:
A. 5-94% by weight of the functionalised polyphenylene ether or of the mixture of the functionalised and the non-functionalised polyphenylene ether.
B. 5-94% by weight of the polyarylene sulphide
C. 1-20% by weight of the epoxy compound.

In addition to the constituents mentioned hereinbefore, the polymer mixture according to the invention may comprise any conventionally used constituents, for example: styrene homopolymers and styrene copolymers, high-impact polystyrene, agents to improve the impact strength, reinforcing fibres, for example, glass fibres, mineral fillers, agents to improve the stability, dyes and pigments, flame-retardants, plasticisers.

The polymer mixture according to the invention preferably also comprises one or more agents to improve the impact strength. In homogeneous polymer mixture according to the invention the addition of such agents results in a considerable improvement of the impact strength; an improvement which exceeds that which can be obtained in non-homogeneous polymer mixtures. Any agent to improve the impact strength suitable for polyphenylene ethers and/or polyarylene sulphides may be used in the polymer mixture according to the invention.

Particularly suitable are the so-called core-shell copolymers having a rubbery core and one or more shells. Further suitable agents are the vinylaromatic polydiene di- or triblock copolymers, in which the block copolymer is not hydrogenated or is partially hydrogenated. Partially hydrogenated or non-hydrogenated linear styrene-butadiene-styrene triblock copolymers and partially hydrogenated or non-partially hydrogenated, radial styrene-butadiene block copolymers may notably be mentioned. Some types of polybutadiene, notably those types which are commercially available as a crumbly product, are also suitable.

The polyoctenylene rubbers described in DE-A-3.518.277 and DE-A-3.442.273 are also suitable.

The polymer mixture according to the invention may moreover comprise one or more of the additives known for polyphenylene ethers and/or for polyarylene sulphides. In particular may be mentioned: reinforcing fibres, for example, glass fibres and fillers.

The polymer mixtures according to the invention are preferably prepared by melt extrusion. In melt extrusion, the individual components are provided, for example, in an extruder. The components are heated in the extruder, usually to a temperature above the melting temperature of the highest-melting-point constituents or one of the highest-melting-point comstituents, for example, the polyarylene sulphide, and intimately mixed with each other. The so-called extrudate then emanates from the extruder, usually in the form of a strand, which is chopped up. The resulting pellets of the polymer mixture according to the invention may be further processed according to techniques known per se for the injection-moulding of thermoplastic synthetic resins.

It has been found in the preperation of the polymer mixture according to the invention in an extruder that the sequence in which the various constituents are mixed with each other is of importance. For example, polymer mixtures having better properties are often obtained when the polyarylene sulphide or a part thereof is premixed in an extruder with the epoxy compound in a separate step. The resulting extrudate is then mixed in an extruder with the remaining constituents.

The invention also relates to products obtained from the polymer mixture according to the invention.

The invention will now be described in greater detail with reference to the ensuing specific examples.

In the examples the following constituents were used:
- PPE:: A non-functionalised poly(2,6-dimethyl-1,4-phenylene) ether having an intrinsic viscosity of 45 ml/g, measured in chloroform at 25°C.
- FPPE:: Poly(2,6-dimethyl-1,4-phenylene) ether with acid groups, obtained according to the first-mentioned method of example 1 of WO-A-86/02086, having an intrinsic viscosity of 57 ml/g measured in chloroform at 25°C. However, 3.5 parts of trimellitic anhydride acid chloride and 3.5 parts of dimethyl-n-butylamine were used per 100 parts of PPE. PPS: A polyarylene sulphide, namely a cured polyphenylene sulphide having a melt viscosity of 200 Pa sec., measured with a Göttfert® capillary rheometer at 300°C and a shearing rate of 200 sec⁻¹.
- SB:: A partially hydrogenated styrene-ethylene/butylene styrene triblock copolymer having a molecular weight of approximately 175,000.
- Epoxy-1:: A bisphenol A type epoxy compound having an epoxy equivalent of 1695-1885 g per equivalent.
- Epoxy-2:: Triglycidyl isocyanurate having an epoxy equivalent of 99 g per equivalent.

### Examples I, II and III, and comparative examples A and B

The constituents as indicated in Table A hereinafter were compounded in the indicated quantities by weight in a blade extruder adjusted at 300°C (blade speed 300 rpm). The extrudate was chopped up to pellets.

Test pieces to determine the impact strength according to zod with notch and without notch were injection-moulded from the pellets.

**TABLE A**

| Example | A | I | II | III | B |
|---|---|---|---|---|---|
| Composition parts by weight) | | | | | |
| PPE | - | - | - | - | 28.5 |
| FPPE | 32.5 | 31.5 | 30.5 | 28.5 | - |
| PPS | 55 | 53 | 52 | 49 | 49 |
| SB | 12.5 | 12.5 | 12.5 | 12.5 | 12.5 |
| Epoxy-1 | - | 3 | 5 | 10 | 10 |

| PROPERTIES | | | | | |
|---|---|---|---|---|---|
| o Impact strength according to IZOD without notch (J/m) | 460 | 420 | 600 | 575 | 390 |
| o Impact strength according to IZOD with notch (J/m) | 37 | 38 | 35 | 36 | 14 |
| o Appearance injection-moulded rod | homogeneous | homogeneous | homogeneous | homogeneous | "mother of pearl" |

It may be seen from the results of Table A that the addition of an epoxy compound leads to an improvement of the impact strength (compare the impact strength according to IZOD without a notch of example A with that of examples II and III). It may be seen from the comparative example B that when a functionalised polyphenylene ether is not used a less favourable impact strength is obtained. Moreover, the so-called mother of pearl-effect occurs in the appearance, which indicates demixing of the various constituents in the polymer mixture.

### Examples IV, V, VI, VII, comparative example C

In these examples the polyarylene sulphide was always precompounded with the epoxy compound, after which the preformed mixture was extruded with the remaining constituents in a second compounding step. In example C an epoxy compound was not used. In that example the polyarylene sulphide was extruded separately in a first step so as to enable a good comparison. In a second step the pre-extruded polyarylene sulphide was extruded with the remaining constituents. The composition of the various polymer mixtures according to these examples and the found properties thereof are recorded in Table B.

**TABLE B**

| Example | C | IV | V | VI | VII |
|---|---|---|---|---|---|
| Composition (parts by weight) | | | | | |
| PPE | - | - | - | - | 14.25 |
| FPPE | 32.5 | 31.5 | 30.5 | 28.5 | 14.25 |
| PPS | 55 | 53 | 52 | 49 | 49 |
| SB | 12.5 | 12.5 | 12.5 | 12.5 | 12.5 |
| Epoxy-1 | - | 3 | 5 | 10 | 10 |

| PROPERTIES | | | | | |
|---|---|---|---|---|---|
| o Impact strength according to IZOD without notch (J/m) | 360 | 635 | 580 | 1150 | 510 |
| o Impact strength according to Izod with notch (J/m) | 25 | 37 | 40 | 70 | 31 |
| o Appearance injection-moulded rod | homogeneous | homogeneous | homogeneous | homogeneous | homogeneous |

When comparing the properties of the polymer mixtures according to the examples IV through VII with those of the polymer mixture according to Example C it may be seen that the addition of an epoxy compound leads to a considerable improvement of the impact strength.

It may be seen from a comparison of the results recorded in Table A (in particular in example III) with the results according to Table B (in particular example VI) that precompounding the polyarylene sulphide with the epoxy compound leads to a further improvement of the impact strength.

The results obtained in example VII demonstrate that it is possible to replace a part of the functionalised polyphenylene ether by a non-functionalised polyphenylene ether.

### EXAMPLE VIII

In this example another epoxy compound was used, namely "epoxy-2". The polyarylene sulphide was precompounded with the epoxy compound in the same manner as described in examples IV through VII. The results of the polymer mixture according to example VIII are compared in the following Table C with the results according to comparative example C (as also indicated in Table B).

**TABLE C**

| Example | C | VIII |
|---|---|---|
| Composition ₍parts by weight) | | |
| PPE | - | - |
| FPPE | 32.5 | 32.5 |
| PPS | 55 | 53.5 |
| SB | 12.5 | 12.5 |
| Epoxy-2 | - | 1.5 |

| PROPERTIES | | |
|---|---|---|
| o Impact strength according to IZOD without notch (J/m) | 360 | 530 |
| o Impact strength according to Izod with notch (J/m) | 25 | 50 |
| o Appearance injection-moulded rod | homogeneous | homogeneous |

It may be seen from the results of Table C that a considerable improvement of the impact strength can also be obtained with "epoxy-2".

## Claims

1. A polymer mixture which comprises a polyphenylene ether (A), a polyarylene sulphide (B) and an epoxy compound (C), characterised in that the polymer mixture comprises as a polyphenylene ether (A) a functionalised polyphenylene ether or a mixture of a functionalised and a non-functionalised polyphenylene ether, the functionalised polyphenylene ether being the reaction product of (a) a polyphenylene ether and (b) a compound of the general formula (i)-Z-(ii), wherein (i) is a group of the formula [X-C(0)] with X = F, Cl, Br, I, OH, -OR, or -0-C(0)-R with R = H, alkyl or aryl, wherein (ii) is a carboxylic acid, acid anhydride, acid amide, imido, carboxylic acid ester, amino, epoxy or hydroxyl group, and wherein the groups (i) and (ii) are bonded together covalently via a bridge Z, Z being a bivalent hydrocarbon radical or the reaction product of a non-functionalised polyphenylene ether and a compound having in the molecular structure a twofold or threefold carbon-to-carbon bond and a carboxylic acid, acid anhydride, acid amide, imido, carboxylic acid ester, amino, epoxy or hydroxyl group or a polyphenylene ether with 0.01-35mol% of polyphenylene ether components wich comprise a COOH group at the aromatic nucleus or at one of the methyl groups substitued at the nucleus or the reaction product of a polyphenylene ether with a polycarboxylic acid and wherein the polymer mixture comprises at least 5% by weight of the functionalised polyphenylene ether calculated with respect to the sum of the quantities by weight of A + B + C.

2. A polymer mixture as claimed in Claim 1, characterised in that the polymer mixture comprises an agent to improve the impact strength.

3. Articles formed from the polymer mixture as claimed in Claim 1 or 2.

## Patentansprüche

1. Polymermischung, die enthält:
einen Polyphenylenäther (A),
ein Polyarylensulfid (B) und
eine Epoxyverbindung (C), dadurch gekennzeichnet, daß die Polymermischung als Polyphenylenäther (A) einen funktionalisierten Polyphenylenäther oder eine Mischung aus einem funktionalisierten und einem nicht funktionalisierten Polyphenylenäther enthält, der funktionalisierte Polyphenylenäther das Reaktionsprodukt aus
(a) einem Polyphenylenäther und
(b) einer Verbindung der allgemeinen Formel (i)-Z-(ii) ist, worin (i) eine Gruppe der Formel [X-C(O)] ist, wobei X = F, Cl, Br, J, OH, -OR oder -O-C(O)-R ist, mit R = H, Alkyl oder Aryl, worin (ii) eine Carbonsäure, Säureanhydrid-, Säureamid-, Imid-, Carbonsäureester-, Amin-, Epoxy- oder Hydroxyl-Gruppe darstellt, und worin die Gruppen (i) und (ii) über eine Brücke Z covalent miteinander verbunden sind, Z ein zweiwertiger Kohlenwasserstoffrest oder das Reaktionsprodukt eines nicht funktionalisierten Polyphenylenäthers ist und eine Verbindung darstellt, die in der Molekularstruktur eine Zweifach- oder Dreifach-Kohlenstoff-Kohlenstoffbindung aufweist und eine Carbonsäure-, Säureanhydrid-, Säureamid-, Imid-, Carbonsäureester-, Amin-, Epoxy- oder Hydroxyl-Gruppe oder einen Polyphenylenäther mit 0,01 bis 35 Mol-% Polyphenylenätherkomponenten darstellt, die eine COOH Gruppe an dem aromatischen Kern oder an einer der Methylgruppen aufweist, die an dem Kern substituiert sind oder dem Reaktionsprodukt eines Polyphenylenäthers mit einer Polycarbonsäure, und worin die Polymermischung wenigstens 5 Gew.-% des funktionalisierten Polyphenylenäthers, berechnet auf der Basis der Summe der Gewichtsmengen von A + B + C enthält.

2. Polymermischung nach Anspruch 1, dadurch gekennzeichnet, daß die Polymermischung ein Mittel zur Verbesserung er Schlagfestigkeit aufweist.

3. Gegenstände, die aus der Polymermischung nach den Ansprüchen 1 oder 2 ausgeformt sind.

## Revendications

1. Mélange de polymères qui comprend un poly(phénylène éther) (A), un poly(sulfure d'arylène) (B) et un composé époxyde (C), caractérisé en ce que le poly(phénylène éther) (A) du mélange de polymère est constitué d'un poly(phénylène éther) fonctionnalisé ou d'un mélange de poly(phénylène éther) fonctionnalisé et non fonctionnalisé, le poly(phénylène éther) fonctionnalisé étant le produit de réaction d'un poly(phénylène éther) (a) et d'un composé (b) de formule générale (i)-Z-(ii), dans laquelle (i) représente un groupe de formule [X-C(O)] avec X = F, Cl, Br, I, OH, -OR, ou -O-C(O)-R avec R= H, alkyle ou aryle, dans laquelle (ii) est un groupe de type acide carboxylique, anhydride d'acide, amide d'acide, imide, ester d'acide carboxylique, amine, époxyde ou hydroxyle, et dans laquelle les groupes (i) et (ii) sont covalentement liés entre eux *via* un pont Z, Z représentant un radical hydrocarboné bivalent ou le produit de réaction d'un poly(phénylène éther) non fonctionnalisé et d'un composé ayant dans sa structure moléculaire une double ou triple liaison carbone-carbone et un groupe de type acide carboxylique, anhydride d'acide, amide d'acide, imide, ester d'acide carboxylique, amine, époxyde ou hydroxyle ou un poly(phénylène éther) avec 0,01% à 35% en mole de composants poly(phénylène éther) portant un groupe COOH sur le noyau aromatique ou sur l'un des substituants méthyle du noyau ou le produit de réaction d'un poly(phénylène éther) avec un poly(acide carboxylique) et dans lequel le mélange de polymère comprend au moins 5% en poids du poly(phénylène éther) fonctionnalisé calculé par rapport à la somme en poids des quantités A+B+C.

2. Mélange de polymères conforme à la revendication 1, caractérisé en ce que le mélange de polymères contient un agent qui augmente la résistance aux chocs.

3. Articles formés à partir du mélange de polymères conforme aux revendications 1 et 2.
